# EUROPEAN PATENT APPLICATION

(11) **EP 2 468 924 A1**
(43) Date of publication of application: **27.06.2012**
(21) Application number: 11194785.9
(22) Date of filing: 21.12.2011
(51) Int. Cl.: C23C 26/00

(54) **Method and apparatus for coating cooking utensils using magnetic force**

(30) Priority: 21.12.2010 KR 20100131651; 19.09.2011 KR 20110093925
(71) Applicant: Kim, Ryong, Seoul (KR)
(72) Inventor: Kim, Ryong, Seoul (KR)
(74) Representative: Grünecker, Kinkeldey, Stockmair & Schwanhäusser

(57) **Abstract**

A method and apparatus for coating utensils using a magnetic force is provided. In a process of applying a coating material mixed with a filler having magnetism reaction particles to a surface of the utensil and heat-treating the utensil, magnets disposed on upper and lower surfaces of the utensil generate the magnetic force to cause the magnetism reaction particles to move toward each point where the magnetic force is generated, so that the density of the magnetism reaction particles is increased to make the surface of the utensil uneven.

## Description

### CROSS-REFERENCE TO RELATED APPLICATION

This application claims the benefit of Korean Patent Application Nos. 10-2010-0131651, filed December 21, 2010 and 10-2011-0093925, filed September 19, 2011 the disclosure of which is hereby incorporated herein by reference in its entirety.

### BACKGROUND OF THE INVENTION

### 1. Field of the Invention

The present invention relates to a method and apparatus for coating utensils using a magnetic force, and more particularly, to a method and apparatus for coating utensils using a magnetic force, capable of making surfaces of cooking utensils uneven using the magnetic force.

### 2. Description of the Related Art

Most utensils whose surfaces need be coated are formed of metal such as aluminum. These metal utensils have been used without surface treatment in their initial stage. As such, the surfaces of the utensils, for instance, cooking utensils, are scratched during use such as cooking. To prevent this phenomenon, a technique of applying a coating solution to the surface of each utensil and forming a coating layer on the surface of the utensil has been developed. Once this technique was developed, utensils having a variety of coating layers on their surfaces appeared along with a variety of coating solutions.

Particularly, a primer coat, a mid coat, and a top coat are sequentially deposited on the surface of each utensil, forming three coating layers, which is called triple coating. This triple coating is generally applied to the utensils.

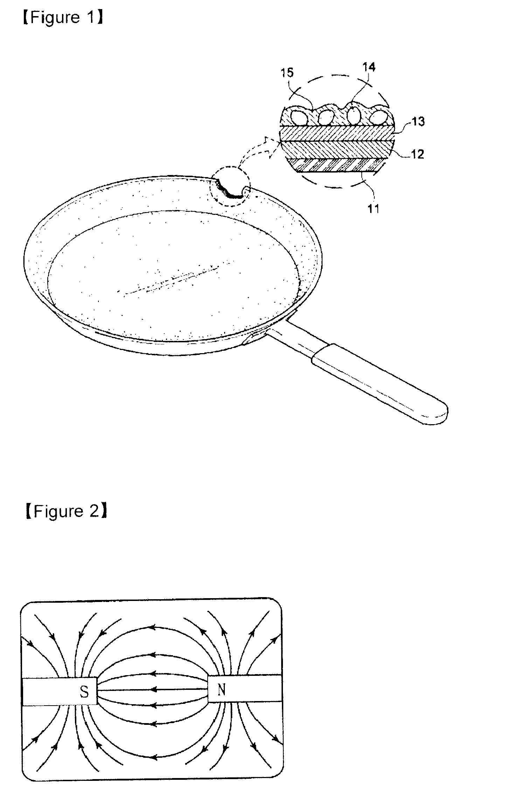

As shown in FIG 1, three coating layers are formed on the surface of a cooking utensil by applying a primer coat 12 to a molded metal layer 11 (undercoating), performing primary heating and drying on the primer coat 12, applying a mid coat 13 to the primer coat (intermediate coating), performing secondary heating and drying on the mid coat 13 until a coated surface is fully hardened, applying separate mineral particles 14 to the mid coat 13, and applying a top coat 15 to the mineral particles 14 and the mid coat 13 (top coating).

The cooking utensils having these coating layers have a flat surface, so that heat conductivity is reduced. As a result, cooking standby time, i.e. preheating time, is increased, and thus cooking efficiency is reduced.

### SUMMARY OF THE INVENTION

An objective of the present invention is to make the surface of a utensil uneven by adding metal particles reacting on a magnetic force to a filler among a binder, a solvent, and the filler constituting a coating material applied when the surface of the utensil is coated, moving the magnetism reaction particles using a magnetic force, and increasing the density of the magnetism reaction particles at each point where the magnetic force is generated.

Further, another objective of the present invention is to make the surface of a utensil uneven in various shapes such as a shape of a plurality of concentric circles, a spiral shape, etc. according to the arrangement of magnets generating an attractive magnetic force.

In addition, another objective of the present invention is to make the surface of a utensil uneven by disposing magnetic force generating means with the same polarity to generate a repulsive force.

According to one aspect of the present invention, there is provided a method of coating utensils using a magnetic force with a coating material containing a binder, a solvent, and a filler, in which, in a process of applying the coating material mixed with the filler having magnetism reaction particles to a surface of the utensil and heat-treating the utensil, magnetic force generating means having different polarities are disposed adjacent to upper and lower surfaces of the utensil to generate the magnetic force, and cause the magnetism reaction particles to move toward each point where the magnetic force is generated, thereby increasing the density of the magnetism reaction particles to cause the coating material heat-treated on the surface of the utensil to be made uneven.

Here, the magnetic force generating means installed adjacent to the upper and lower surfaces of the utensil may be installed to have the same polarity to generate a repulsive force, so that the magnetism reaction particles move out of a range of magnetic lines of force of the repulsive force due to the repulsive force to make the surface of the utensil uneven.

Further, the magnetic force generating means disposed on the utensil may be installed in a shape of a plurality of concentric circles.

The magnetic force generating means disposed on the utensil may be installed in a spiral shape.

Further, the heat-treating process may include heat-treating the coating material within a preheating temperature ranging from 40 °C to 60 °C.

According to another aspect of the present invention, there is provided an apparatus for coating utensils using a magnetic force with a binder, a solvent, and a filler. The apparatus includes: a pair of blocks disposed on upper and lower surfaces of the utensil to be coated so as to be opposite to each other; and magnetic force generating means installed so as to be opposite to each other in a form in which a plurality of pins protrude from the opposite faces of the pair of blocks and having the same arrangement.

Here, the pair of blocks may include recesses formed in the opposite faces thereof in the same arrangement, and the magnetic force generating means may be installed in the recesses and are flush with the faces of the blocks.

According to the method and apparatus for coating utensils using a magnetic force as described above, the cooking utensil can be produced in such a manner that, in the process of applying the coating material in which the magnetism reaction particles are mixed to the surface of the utensil and preheating the utensil, the magnetism reaction particles move due to the attractive magnetic force generated from the magnets arranged on the upper and lower surfaces of the utensil. Thereby, the density of the magnetism reaction particles is increased at each point where the magnetic force is generated, making the surface of the cooking utensil uneven. In this manner, the surface of the utensil is allowed to be uneven in the coating process, so that a surface area of the cooking utensil can be increased due to its uneven surface, and be improved in heat efficiency.

Further, a variety of cooking utensils can be produced by forming the surface of the cooking utensil in various shapes such as a shape of a plurality of concentric circles, a spiral shape, etc. according to the arrangement of the magnets.

In addition, the magnets disposed on the surfaces of the cooking utensil can be disposed so as to have the same polarity to generate a repulsive magnetic force, so that the magnetism reaction particles can irregularly move to make the surface of the cooking utensil uneven in more various shapes.

### BRIEF DESCRIPTION OF THE DRAWINGS

The foregoing and other objects, features and advantages of the invention will become more apparent from the following more particular description of exemplary embodiments of the invention and the accompanying drawings. The drawing is not necessarily to scale, emphasis instead being placed upon illustrating the principles of the invention.
FIG. 1 is a partial cutaway perspective view showing a coated state of a conventional utensil;
FIG. 2 shows magnetic lines of force of a magnetic body;
FIG. 3 is an exploded perspective view of an apparatus for coating utensils using a magnetic force according to a first embodiment of the present invention;
FIG. 4 is an exploded perspective view of an apparatus for coating utensils using a magnetic force according to a second embodiment of the present invention;
FIG. 5 is a cross-sectional view of an apparatus for coating utensils using a magnetic force according to a first embodiment of the present invention;
FIG. 6 is a cross-sectional view of an apparatus for coating utensils using a magnetic force according to a second embodiment of the present invention; and
FIG. 7 is a cross-sectional view of an apparatus for coating utensils using a magnetic force according to a third embodiment of the present invention.

### DETAILED DESCRIPTION OF THE INVENTION

The present invention will be described more fully hereinafter with reference to the accompanying drawings, in which exemplary embodiments of the invention are shown.

First, it should be noted that, whenever possible, like reference numerals will be used to refer to like components or parts. The detailed description of known functions or constructions necessarily obscuring the subject matter of the present invention will be avoided hereinafter.

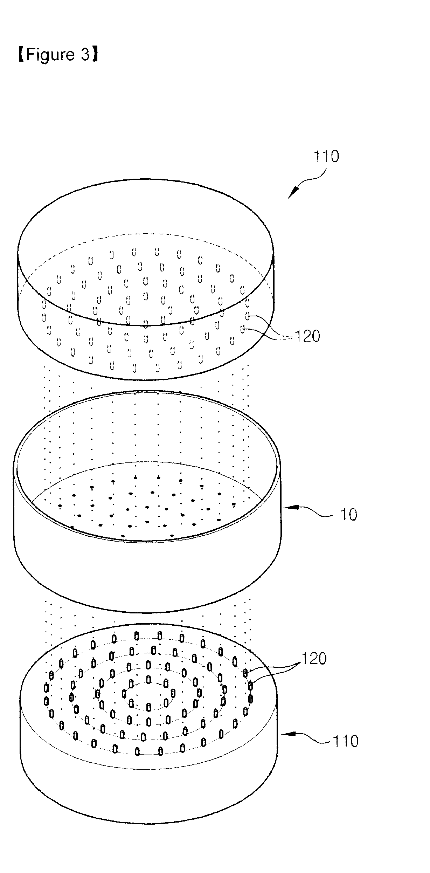

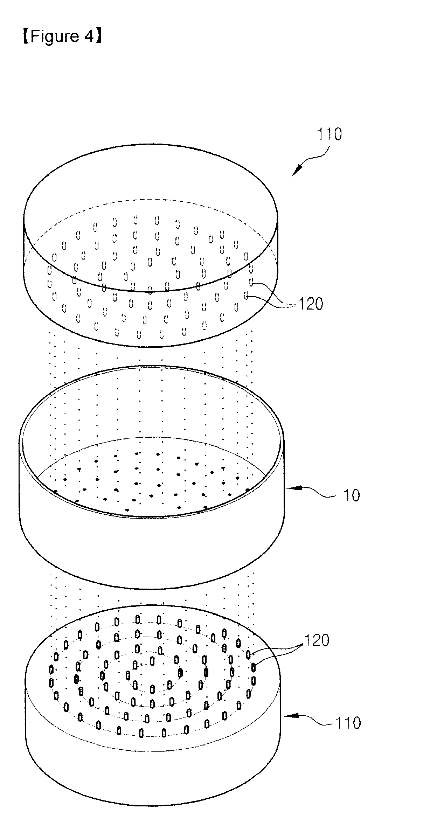

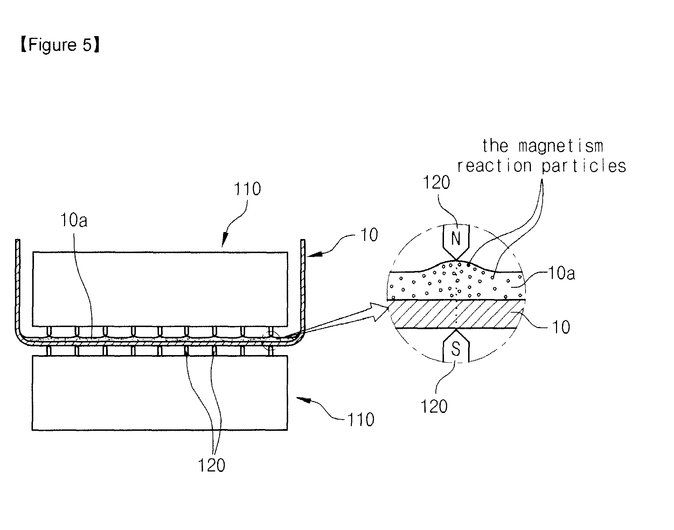

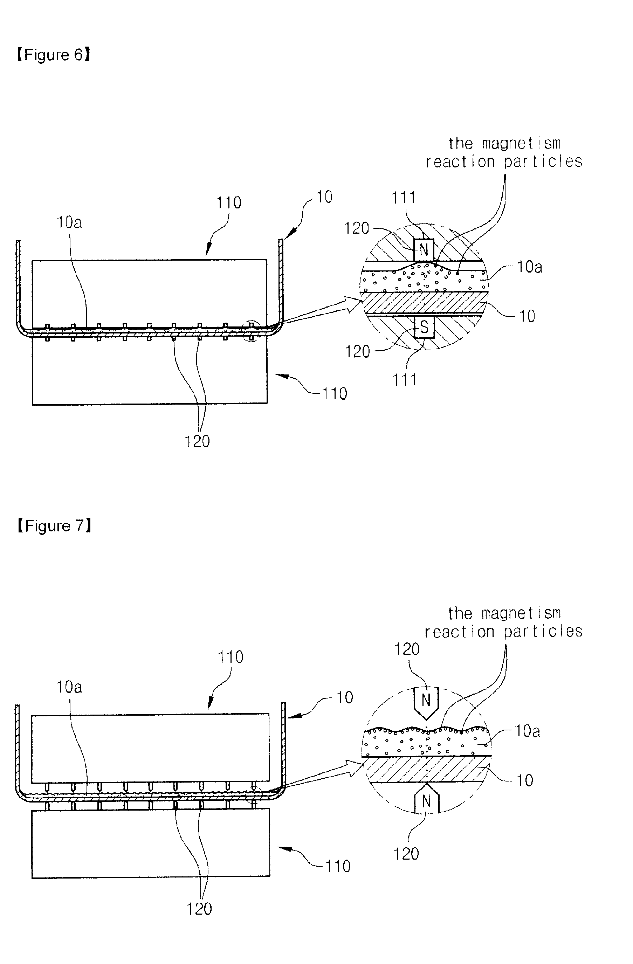

FIG. 2 shows magnetic lines of force of a magnetic body. FIG. 3 is an exploded perspective view of an apparatus for coating utensils using a magnetic force according to a first embodiment of the present invention. FIG. 4 is an exploded perspective view of an apparatus for coating utensils using a magnetic force according to a second embodiment of the present invention. FIG. 5 is a cross-sectional view of an apparatus for coating utensils using a magnetic force according to a first embodiment of the present invention. FIG. 6 is a cross-sectional view of an apparatus for coating utensils using a magnetic force according to a second embodiment of the present invention. FIG. 7 is a cross-sectional view of an apparatus for coating utensils using a magnetic force according to a third embodiment of the present invention.

First, a cooking utensil typically has a coating layer on its surface to which a coating material 10a made up of a binder, a solvent, and a filler is applied and heat-treated.

The coating layer is divided into a primer coat, a mid coat, and a top coat according to a sequence in which it is coated and deposited on the surface of the cooking utensil.

That is, the primer coat refers to a coating layer coated on the surface of the cooking utensil. The mid coat refers to a coating layer coated on the primer coat, and acts as a dual coating layer along with the primer coat. The top coat refers to a coating layer coated on the mid coat, and acts as a triple coating layer along with the primer and mid coats.

Here, these coating layers may be selectively applied to the cooking utensil.

In other words, the cooking utensil may be triply coated by the primer, mid, and top coats, be doubly coated by the primer and mid coats, or be singly coated by the primer coat.

The coating material 10a has a composition as follows.

The binder includes a mixture of polyamide dissolved in n-methyl-2-pyrrolidone (NMP), and a polytetrafluoroethylene (PETE) dispersion solution.

The solvent includes water, aromatic hydrocarbon, triethylamine, oleic acid, and a surfactant.

The filler is selected from the group consisting of carbon black in which a silica dispersion solution is contained, aluminum oxide, titanium oxide, and iron oxide.

Here, the carbon black, aluminum oxide, titanium oxide, and iron oxide determine a color exhibited when the coating material 10a is coated on the surface of the cooking utensil 10.

In detail, the carbon black is used for a black color, the aluminum oxide and titanium oxide are used for a white color, and the iron oxide is used for a red color. These materials can function as the filler when the cooking utensil 10 is coated.

Further, metal oxide particles (hereinafter referred to as "magnetism reaction particles") that are a metal material reacting on magnetism are added to the filler.

As shown in FIGS. 3 to 6, the cooking utensil 10 is produced via the coating process as mentioned above. The magnetism reaction particles are added to the coating material 10a, and then the coating material 10a is applied to the surface of the cooking utensil 10. Before the coating material 10a is heat-treated, magnetic force generating means 120 are disposed above and below the cooking utensil 10.

In detail, the magnetic force generated from the magnetic force generating means 120 causes the magnetism reaction particles added to the coating material 10a to move in the direction of a magnetic field formed by the magnetic lines of force, thereby increasing the density of the magnetism reaction particles to make the surface of the cooking utensil 10 uneven.

The coating material 10a is applied to the surface of the cooking utensil 10, and then the magnetic force generating means 120 are disposed on the opposite sides of the cooking utensil 10 so as to be close to the surface of the cooking utensil 10. Here, the magnetic force generating means 120 have different polarities, thereby generating an attractive force therebetween.

Since the coating material 10a has fluidity, the magnetism reaction particles of the filler contained in the coating material 10a move toward one side by the magnetic force of the magnetic force generating means 120, so that the density of the magnetism reaction particles is increased at a point where the magnetic force is generated.

As shown in FIG. 2, the magnetic lines of force refer to lines that represent a direction of the magnetic force at each point in the magnetic field. Thus, the magnetic lines of force have a direction parallel to the direction of the magnetic field, and are directed from the north pole to the south pole.

Further, since a direction in which the magnetic force acts at an arbitrary point in the magnetic field is only one like the electric lines of force, the magnetic lines of force are split halfway, or intersect each other. The magnetic lines of force which come out of the north pole always terminate at the south pole, and are not dissipated or generated halfway.

Further, the density of the magnetic lines of force represents an intensity of the magnetic field. As an interval between the magnetic lines of force becomes narrower, the intensity of the magnetic field becomes stronger. The interval between the magnetic lines of force is narrow at opposite poles of the magnet, and the density of the magnetic lines of force is lowered as the magnetic lines of force move away from the poles.

In this way, as the magnetism reaction particles are collected at a high density, protrusions are formed on the surface of the cooking utensil 10. Then, a heat-treating process is performed with the magnetic force generating means disposed close to the cooking utensil. Alternatively, the heat-treating process may be performed on only the cooking utensil excluding the magnetic force generating means.

Here, in the heat-treating process, the coating layer is primarily heat-treated within a preheating temperature ranging from 40 °C to 60 °C.

The surface of the cooking utensil 10 is made uneven by the method of coating utensils using a magnetic force, so that it is possible to increase a surface area of the cooking utensil 10 and thus to improve heat efficiency.

Afterwards, the surface of the cooking utensil is made uneven using the magnetic force and is primarily hardened by the heat-treating process, and then the cooking utensil is finished by secondary heat treatment at a high temperature of about 400°C to 600 °C.

Further, the uneven surface of the cooking utensil 10 is allowed to have the shape of a plurality of concentric circles, a spiral shape, or another shape of various images, characters, etc. according to the arrangement of the magnetic force generating means, so that an aesthetic effect of the cooking utensil is improved.

As shown in FIG. 7, the magnetic force generating means 120 installed above and below the cooking utensil are arranged so as to have the same polarity to generate a repulsive force. Thus, the magnetism reaction particles are formed in an irregular shape by the repulsive force.

When the repulsive force is generated from the magnetic force generating means 120, the magnetism reaction particles move outwards at a point where the repulsive force is generated on the surface of the cooking utensil.

That is, the magnetism reaction particles of the coating layer move outwards at each point where the repulsive force is generated within a range of the magnetic lines of force of the repulsive force. Here, the density of the moving magnetism reaction particles becomes non-uniform like an unbalanced range of the magnetic lines of force.

Moreover, virtual magnetic lines of force are superposed and collided in a gap between the plurality of magnetic force generating means 120, and thus the irregular range of the magnetic lines of force is made more irregular, so that the magnetism reaction particles contained in the coating material 10a cooperate to have the non-uniform density.

As described above, in the process of applying the coating material 10a in which the magnetism reaction particles are mixed to the surface of the cooking utensil 10 and then preheating it, the magnetism reaction particles move due to the attractive force of the magnetic force generated from the magnetic force generating means 120 arranged on the upper and lower surfaces of the cooking utensil 10. Thereby, the density of the magnetism reaction particles is increased at a point where the magnetic force is generated, making the surface of the cooking utensil 10 uneven. In this manner, the surface of the cooking utensil is allowed to be uneven in the coating process, so that the surface area of the cooking utensil can be increased due to the uneven surface of the cooking utensil, and thus heat efficiency is improved. The surface of the cooking utensil can be formed in various shapes such as a shape of a plurality of concentric circles, a spiral shape, etc. according to the arrangement of the magnetic force generating means 120.

The magnetic force generating means disposed on the upper and lower surfaces of the cooking utensil may be disposed so as to have the same polarity to generate a repulsive magnetic force, so that the magnetism reaction particles can irregularly move to make the surface of the cooking utensil uneven in more various shapes.

A coating apparatus 100 used to perform the method of coating utensils using a magnetic force will be described below.

The coating apparatus 100 includes blocks 110 and magnetic force generating means 120.

The blocks 100 are provided in a pair, and are disposed on upper and lower surfaces of a utensil 10 to be coated so as to be opposite to each other.

The magnetic force generating means 120 generate a magnetic force. The magnetic force generating means 120 are installed in plural number on the opposite faces of the blocks 110 so as to mutually correspond to one another.

The magnetic force generating means 120 may be disposed in the shape of a plurality of concentric circles or in a spiral shape, in a shape of various images, figures, characters, so that the surface of the utensil 10 can be made uneven in various shapes.

In a first embodiment as shown in FIG. 5, the magnetic force generating means 120 have the shape of a pin, and are vertically installed on the pair of blocks 110 so as to be opposite to one another in the same arrangement, so that it is possible to guarantee the magnetic force to be further concentrated.

In a second embodiment as shown in FIG. 6, the magnetic force generating means 120 are coupled into recesses 111 formed in the surfaces of the pair of blocks 110 so as to have a surface parallel to the surface of the utensil 10.

In the first and second embodiments, the pair of magnetic force generating means 120 disposed so as to be opposite to each other are installed to have different polarities of the north and south poles. Thus, the magnetic force is generated between the pair of magnetic force generating means 120, and causes the magnetism reaction particles to move toward each point where the magnetic force is generated, so that the density of the magnetism reaction particles is increased to make the surface of the utensil 10 uneven.

In a third embodiment as shown in FIG. 7, the magnetic force generating means 120 are adapted to have the same polarity. That is, the pair of magnetic force generating means 120 are installed to have the same polarity of the north or south pole, so that the repulsive force is generated from the magnetic force generating means 120.

The magnetism reaction particles of the coating layer move outwards at each point where the repulsive force is generated within a range of the magnetic lines of force of the repulsive force. Here, the density of the moving magnetism reaction particles becomes non-uniform like an unbalanced range of the magnetic lines of force, so that an irregular shape is formed on the surface of the utensil.

The coating using the apparatus for coating utensils using a magnetic force configured as described above is performed as follows.

The coating material 10a is applied to the surface of the utensil 10, and the blocks 110 on which the magnetic force generating means 120 having different polarities are mounted become close to the upper and lower surfaces of the utensil 10. Thereby, the magnetic force is generated from the magnetic force generating means 120, and thus the magnetism reaction particles contained in the coating material 10a move toward each point where the magnetic force is generated, so that the density of the magnetism reaction particles is increased to make the surface of the utensil uneven.

Afterwards, the utensil is preheated to a temperature ranging from 40 °C to 60 °C by a heat-treating apparatus with the utensil 10 separated from the utensil coating apparatus or without the utensil 10 being separated from the utensil coating apparatus, and thus the uneven surface of the utensil is hardened. Then, the utensil is subjected to a heat-treating process of drying and sintering the utensil at a temperature ranging from about 400°C to 600 °C using a firing furnace. Thereby, the process of coating the utensil is finished.

While the invention has been described in detail in connection with the embodiments, it should be readily understood that the invention is not limited to such disclosed embodiments and attached drawings. Accordingly, it will be apparent to those skilled in the art that various changes in form and details may be made therein without departing from the spirit and scope of the invention as defined by the appended claims.

## Claims

1. A method of coating utensils using a magnetic force with a coating material containing a binder, a solvent, and a filler, in which, in a process of applying the coating material mixed with the filler having magnetism reaction particles to a surface of the utensil and heat-treating the utensil, magnetic force generating means having different polarities are disposed adjacent to upper and lower surfaces of the utensil to generate the magnetic force, and cause the magnetism reaction particles to move toward each point where the magnetic force is generated, thereby increasing the density of the magnetism reaction particles to cause the coating material heat-treated on the surface of the utensil to be made uneven.

2. The method according to claim 1, wherein the magnetic force generating means installed adjacent to the upper and lower surfaces of the utensil are installed to have the same polarity to generate a repulsive force, so that the magnetism reaction particles move out of a range of magnetic lines of force of the repulsive force due to the repulsive force to make the surface of the utensil uneven.

3. The method according to claim 1, wherein the magnetic force generating means disposed on the utensil are installed in a shape of a plurality of concentric circles.

4. The method according to claim 1, wherein the magnetic force generating means disposed on the utensil are installed in a spiral shape.

5. The method according to claim 1, wherein the heat-treating process includes heat-treating the coating material within a preheating temperature ranging from 40 °C to 60 °C.

6. An apparatus for coating utensils using a magnetic force with a binder, a solvent, and a filler, the apparatus comprising:
a pair of blocks disposed on upper and lower surfaces of the utensil to be coated so as to be opposite to each other; and
magnetic force generating means installed so as to be opposite to each other in a form in which a plurality of pins protrude from the opposite faces of the pair of blocks and having the same arrangement.

7. The apparatus according to claim 6, wherein the pair of blocks include recesses formed in the opposite faces thereof in the same arrangement, and the magnetic force generating means are installed in the recesses and are flush with the faces of the blocks.
